Europäisches Patentamt

European Patent Office

Office européen des brevets

(11) Publication number: **0 074 410**
**B1**

# EUROPEAN PATENT SPECIFICATION

(45) Date of publication of patent specification: **07.01.87**

(21) Application number: **82900988.5**

(22) Date of filing: **17.03.82**

(86) International application number:
**PCT/JP82/00074**

(87) International publication number:
**WO 82/03292 30.09.82 Gazette 82/23**

(51) Int. Cl.⁴: **G 11 B 5/70,** G 11 B 5/714,
H 01 F 1/06

(54) MAGNETIC RECORDING MEDIUM.

(30) Priority: **19.03.81 JP 40202/81**

(43) Date of publication of application:
**23.03.83 Bulletin 83/12**

(45) Publication of the grant of the patent:
**07.01.87 Bulletin 87/02**

(84) Designated Contracting States:
**DE FR GB NL**

(56) References cited:
**DE-A-3 148 769**
**GB-A- 974 627**
**JP-A-49 043 604**
**JP-A-50 133 806**
**JP-B-45 016 868**
**JP-B-47 041 158**

(73) Proprietor: **SONY CORPORATION**
**7-35 Kitashinagawa 6-Chome Shinagawa-ku**
**Tokyo 141 (JP)**

(72) Inventor: **CHUBACHI, Ryoji Sony Magnetic**
**Products Inc.**
**4-1 Sakuragi 3-chome**
**Tagajo-shi Miyagi 985 (JP)**
Inventor: **KAWAMURA, Yoshihisa Sony**
**Magnetic Products Inc.**
**4-1 Sakuragi 3-chome**
**Tagajo-shi Miyagi 985 (JP)**
Inventor: **SOMEZAWA, Masashi Sony Magnetic**
**Products Inc.**
**4-1 Sakuragi 3-chome**
**Tagajo-shi Miyagi 985 (JP)**

(74) Representative: **Thomas, Christopher Hugo**
**et al**
**D Young & Co 10 Staple Inn**
**London WC1V 7RD (GB)**

Courier Press, Leamington Spa, England.

# 0 074 410

**Description**

This invention relates to magnetic recording media.

Embodiments of the invention are suitable for high density recording in which a short wavelength signal is recorded in, for example, a video tape recorder (VTR), an audio tape recorder or a digital signal recorder.

In a VTR, a luminance signal is usually recorded as a frequency modulated (FM) signal. In recording the signal, a recording wavelength must be selected which corresponds to a frequency existing at the centre of the FM carrier, having deviation for the luminance signal which occupies the highest band of the recorded signal. In this specification, the frequency at the centre of the FM carrier will be referred to as the centre recording frequency, and the wavelength corresponding to the centre recording frequency will be referred to as the centre recording wavelength.

Recently, there has been a trend in VTRs to use short wavelength recording, particularly for high density recording, and this requires the centre recording wavelength to be 1 μm or less.

Moreover, attempts have been made to improve the surface properties of the magnetic recording medium, so as to reduce spacing-loss as much as possible. However, in spite of these previously proposed techniques, the centre recording wavelength of present well known magnetic recording media which utilize chromium dioxide or iron oxide as the magnetic powder is generally about 1 μm at best.

With a well known magnetic recording medium which utilizes iron or a ferromagnetic alloy powder, if the playback output is increased using the high coercive force and the high residual magnetization available, and if attempts are made to reduce the spacing-loss as much as possible, high density recording is possible, but as the output increases, the noise also increases so that a picture with high quality cannot be achieved.

Other, earlier, examples of magnetic recording media using acicular ferromagnetic alloy particles and acicular metal (predominantly iron) particles are disclosed in US patent specification US—A—3 767 464 and French patent specification FR—A—2 185 827 referred to in the international search report.

According to the present invention there is provided a magnetic recording medium for high density recording with a centre recording wavelength of less than 1 μm, the medium comprising:

a non-magnetic substrate; and

a magnetic layer containing iron or ferromagnetic alloy powder formed on said substrate;

characterized in that:

the coercive force of said magnetic layer is 79577 A/m (1000 Oe) or more, and the specific surface area (BET adsorption method) of said iron or ferromagnetic alloy powder is 45 m$^2$/g or more.

Thus we have found that the specific surface area (as measured by the BET adsorption method) of an iron or ferromagnetic alloy powder such as acicular Fe powder, Fe—Co powder or Fe—Co—Ni powder affects the noise level. On the basis of such clarification, in a magnetic recording medium where a magnetic layer containing such powder is formed on a non-magnetic substrate, if the coercive force of the magnetic layer is made 79577 A/m (1000 Oe) or more and the specific surface area is made 45 m$^2$/g, a magnetic recording medium for high density recording can be made with a centre recording wavelength of less than 1 μm.

As the ferromagnetic alloy powder, there can be used, for example, Fe, Fe—Co or Fe—Co—Ni, or an acicular alloy powder containing additional elements such as Al, Cr or Si in fairly small amounts, considering, for example, anti-corrosion or the prevention of sintering during manufacture. These acicular alloy powders can be obtained by reducing acicular iron oxide and iron hydroxyoxide and if necessary, iron oxide containing metals such as Ni or Co, or iron hydroxyoxide as a starting material in a reducing atmosphere such as H$_2$ gas. The specific surface area of this ferromagnetic alloy powder can be controlled by selecting the specific surface area of the starting materials.

A coercive force Hc of the magnetic layer is selected to be more than 79577 A/m (1000 Oe), preferably in a range from 79577 to 159155 A/m (1000 to 2000 Oe), more preferably in a range from 87535 to 119366 A/m (1100 to 1500 Oe). That is, when short wavelength recording is intended, it is desired that the coerceive force is selected to be reasonably large, namely, more than 79577 A/m (1000 Oe). But, if the coercive force is made too large, saturation will occur in the magnetic head upon recording and also the recorded signal will be difficult to erase.

In order to make the coercive force Hc 79577 A/m (1000 Oe), or above, since the coercive force Hc is dependent on shape anisotropy, it is desired that the axial ratio of the ferromagnetic alloy (acicular ratio), namely, the ratio between the long axis and the short axis is selected to be seven or more, preferably more than ten.

Moreover, it is preferable to select a coating thickness of the magnetic layer (after having been dried) to be 0.5 to 6 μm. This is because if the coating is too thin, it is difficult to form a uniform coating film, so that drop-out occurs, while if the coating film is too thick, a thickness loss due to self-demagnetization occurs.

Furthermore, a powder/binder (P/B) ratio, which is the ratio between the weight of the magnetic powder and the weight of the binder which form the magnetic layer is selected to be in a range from five to twelve, preferably in a range from six to ten. This is because if the amount of binder too large, namely, if the P/B ratio is too small, the residual magnetic flux density Br is insufficient, so that the signal-to-noise ratio

**0 074 410**

cannot be improved, while if the P/B ratio is too large, the amount of powder eroded in use is increased, so lowering the durability.

As the binder used in this magnetic layer, the following are examples: nitrocellulose; vinyl chloride-vinyl acetate copolymer; vinyl chloride-vinyl acetate-vinyl alcohol copolymer; vinyl chloride-vinyl propionate copolymer; vinylidene chloride-vinyl chloride copolymer; vinylidene chloride-acrylonitrile copolymer; acrylonitrile-butadiene copolymer; acetal resin; butyral resin; formal resin; polyester resin; polyurethane resin; polyamide resin; epoxy resin; and phenoxy resin or mixtures thereof.

For the magnetic layer, aluminium oxide, chromium oxide or silicon oxide can be added as a reinforcing element thereof; squalane as a lubricant thereof; carbon black as an antistatic agent thereof; and lecithin as a dispersant thereof.

Materials to form the magnetic layer are disssolved in an organic solvent to prepare the magnetic coating material, which are then coated on the non-magnetic base. The solvents for the magnetic coating material may be: a ketone (for example, acetone, methyl ethyl ketone, methyl isobutyl ketone or cyclohexanone); an alcohol (for example, methanol, ethanol, propanol or butanol); an ester (for example, methyl acetate, ethyl acetate, butyl acetate, ethyl lactate, glycol acetate or monoethyl ether); a glycol ether (for example, ethylene glycol dimethyl ether, ethylene glycol monoethyl ether or dioxane); an aromatic hydrocarbon (for example, benzene, toluene or xylene); an aliphatic hydrocarbon (for example, hexanone or heptane); or nitro propane. The non-magnetic base on which the magnetic coating material is coated may be: a polyester (for example, polyethylene terephthalate); a polyolefin (for example, polypropylene); a cellulose derivative (for example, cellulose triacetate or cellulose diacetate); polycarbonate; polyvinyl chloride; polyimide; polyamide; polyhydrazide; a metal (for example, aluminium or copper); or paper.

The specific surface area measured according to the BET adsorption method the ferromagnetic alloy powder which forms the magnetic layer is selected to be at least 45 $m^2/g$. This is due to the discovery by modulation noise measurement that when the specific surface area is 45 $m^2/g$, a desired low noise level can be established with the recording wavelength 1 μm or below. With the specific surface area 45 $m^2/g$ or more the superparamagnetic state needs to be avoided, and preferably a range from 45 to 150 $m^2/g$ is used.

The invention will now be described by way of example with reference to the accompanying drawings, in which:

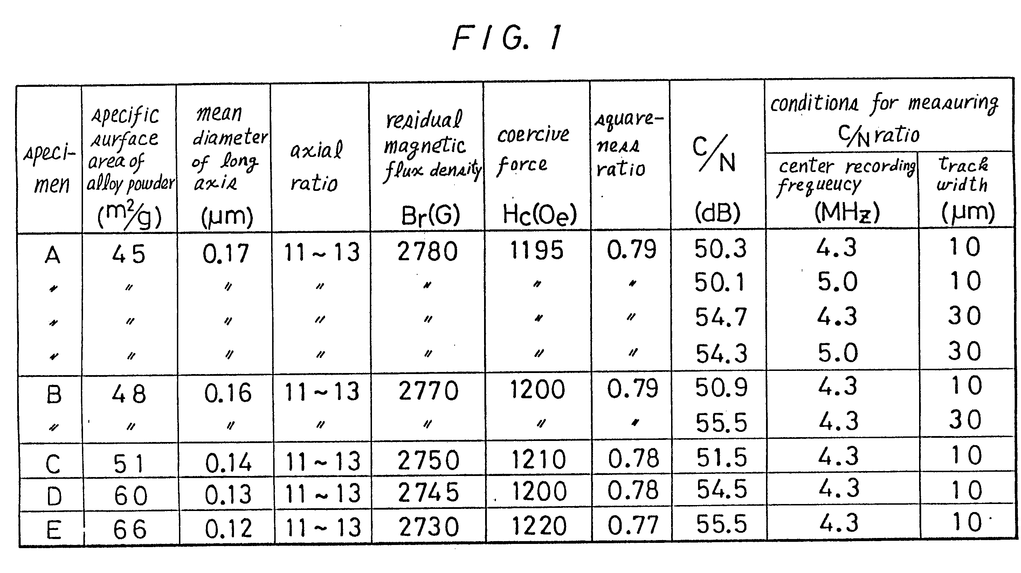

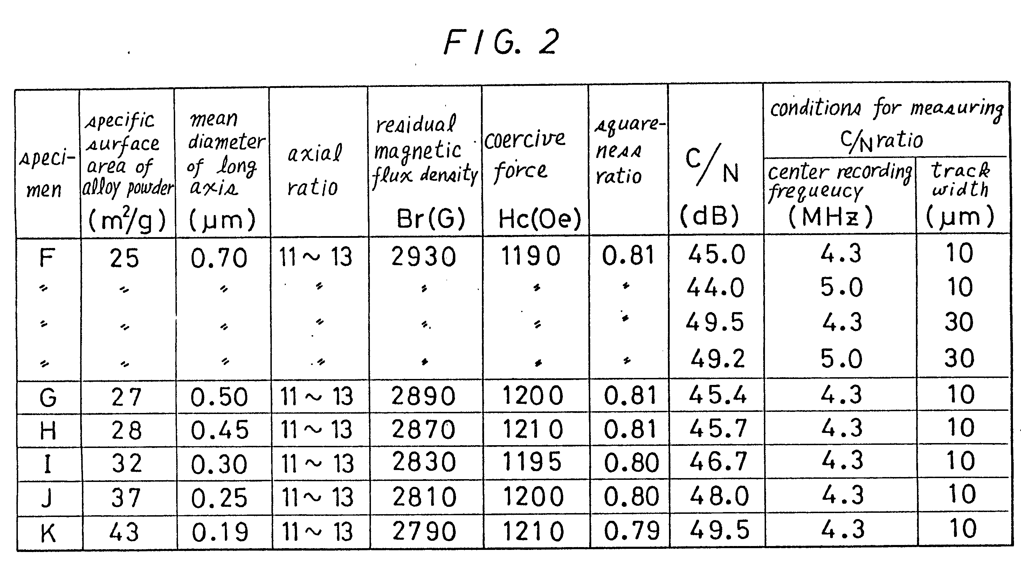

Figures 1 and 2 are characteristic tables for an example of a magnetic recording medium according to this invention and a comparative example thereof. (To convert the coercive force Hc from Oe to A/m, multiply by 79.5775; 10.000 G=1T).

An example of this invention will now be described.

| | |
|---|---|
| acicular ferromagnetic iron powder | 100 parts by weight |
| vinyl chloride-vinyl acetate copolymer (VINYLITE (trade mark) VYHH manufactured by Union Carbide Corp) | 11 parts by weight |
| thermoplastic polyurethane resin (ESTAN (trade mark) 5701 manufactured by B F Goodrich Co) | 5 parts by weight |
| chromium oxide ($Cr_2O_3$) | 5 parts by weight |
| carbon black | 5 parts by weight |
| lecithin | 2 parts by weight |
| fatty acid ester | 1 part by weight |
| toluene | 50 parts by weight |
| methyl ethyl ketone | 50 parts by weight |
| cyclohexanone | 50 parts by weight |

This composition was put into a ball mill, and mixed and dispersed for twenty hours. Four parts by weight of isocyanate compound (DESMODULE (trade mark) L-75 manufactured by Bayer AG) were then added, and dispersed by high speed shear mixing for one hour to produce a magnetic coating material.

This magnetic coating material was coated on one surface of a polyethylene telephthalate film 14 μm thick and with a surface roughness of 0.03 μm so as to be 4.0 μm thick after it dried. Then, it was subjected to an orientation treatment in a DC magnetic field of 2500 Gauss (0.25T), heated and dried at 100°C, subjected to a super-calender treatment, and then cut into half-inch (approximately 1.27 mm) width, resulting in a video tape, namely, a magnetic recording medium. By similar processes, magnetic recording media (specimens A to E) of five kinds were made using alloy powders with different specific surface areas measured according to the BET adsorption method, and their electro-magnetic characteristics were measured. The results are indicated in the table of Figure 1, where a modulation noise (C/N ratio:carrier-to-noise ratio) was measured under the condition that the relative speed between a magnetic recording medium and a magnetic head was 3.5 m/s, the centre recording frequency was both 4.3 MHz and 5.0 MHz, namely, the centre recording wavelength was less than 1 μm, the modulation frequency was ±2 MHz for both, the band-width was 10 kHz, and the track width was 30 μm and 10 μm as shown. The magnetic recording head used comprised sendust alloy as a magnetic core, while the magnetic playback head used comprised magnetic ferrite as a magnetic core.

3

# 0 074 410

Comparative specimens F to K were made by a similar method to that of the above example, with the specific surface areas of each of the Fe powders used as the ferromagnetic alloy powder not more than 43 $m^2/g$, and then like measurements were performed. The results are shown in the table of Figure 2.

As is clear from the table of Figure 1, in the case of the specimen A, even in high density recording where the track width was reduced to 10 µm, a C/N ratio of more than 50 dB was obtained, so that a picture of high quality can be obtained. If the specific surface area is increased, the C/N ratio is also increased. Thus it is expected that the track width will be reduced still more thereby to enable higher density recording to be carried out. That is, to effect the high density recording, it is required that not only the recording wavelength must be reduced but also the track width must be reduced. However, if the C/N ratio is low, the track width cannot be reduced. But with embodiments of the invention, the C/N ratio can be increased, so that the track width can be reduced and thereby the recording density can be improved. As compared therewith, in the specimens F to K where each of the specific surface areas of magnetic alloy powders is not more than 43 $m^2/g$ each C/N ratio thereof indicates a low value of not more than 50 dB.

In the specimens A to K, differences in the surface roughness were not apparent, so it can be considered that the C/N ratio depends on the specific surface area. The surface roughness of each of the specimens was measured by a tracer-type surface roughness measuring apparatus, where the measurment error of the surface roughness was within ±0.001 µm.

### Claims

1. A magnetic recording medium for high density recording with a centre recording wavelength of less than 1 µm, the medium comprising:
a non-magnetic substrate; and
a magnetic layer containing iron or ferromagnetic alloy powder formed on said substrate;
characterized in that:
the coercive force of said magnetic layer is 79577 A/m (1000 Oe) or more, and the specific surface area (BET adsorption method) of said iron or ferromagnetic alloy powder is 45 $m^2/g$ or more.

2. A magnetic recording medium according to claim 1 wherein said coercive force is 79577 to 159155 A/m (1000 to 2000 Oe).

3. A magnetic recording medium according to claim 1 wherein said coercive force is 87535 to 119366 A/m (1100 to 1500 Oe).

4. A magnetic recording medium according to claim 1, claim 2 or claim 3 wherein said specific surface area is in the range 45 to 150 $m^2/g$.

### Patentansprüche

1. Magnetisches Aufnahmemedium für hohe Aufzeichnungsdichte mit einer mittleren Aufzeichnungswellenlänge von weniger als 1 µm
mit einem nichtmagnetischen Träger
sowie mit einer auf diesem Träger ausgebildeten magnetischen Schicht, die Eisenpulver oder aus einer ferromagnetischen Legierung bestehendes Pulver enthält,
dadurch gekennzeichnet,
daß die Koerzitivkraft der magnetischen Schicht 79577 A/m (1000 Oe) oder mehr beträgt
und daß die (nach der BET-Adsorptionsmethode bestimmte) spezifische Oberfläche des Pulvers aus Eisen oder aus ferromagnetischer Legierung 45 $m^2/g$ oder mehr beträgt.

2. Magnetisches Aufnahmemedium nach Anspruch 1, bei dem die Koerzitivkraft 79577 bis 159155 A/m (1000 bis 2000 Oe) beträgt.

3. Magnetisches Aufnahmemedium nach Anspruch 1, bei dem die Koerzitivkraft 87535 bis 119366 A/m (1100 bis 1500 Oe) beträgt.

4. Magnetisches Aufnahmemedium nach Anspruch 1, 2 oder 3, bei dem die spezifische Oberfläche im Bereich von 45 bis 150 $m^2/g$ liegt.

### Revendications

1. Support d'enregistrement magnétique pour enregistrement à haute densité avec une longueur d'enregistrement au centre inférieure à 1 µm, le support comprenant:

— un substrat non magnétique; et
— une couche magnétique contenant une poudre de fer ou d'alliage ferromagnétique formée sur ledit substrat;

caractérisé en ce que:
la force coercitive de ladite couche magnétique vaut 79577 A/m (1000 Oe) ou plus, et la surface massique (procédé d'adsorption BET) de ladite poudre de fer ou d'alliage ferromagnetique est de 45 $m^2/g$ ou plus.

4

2. Support d'enregistrement magnétique selon la revendication 1, où ladite force coercitive vaut de 79577 à 159155 A/m (de 1000 à 2000 Oe).

3. Support d'enregistrement magnétique selon la revendication 1, où ladite force coercitive vaut de 87535 à 119366 A/m (de 1100 à 1500 Oe).

4. Support d'enregistrement magnétique selon la revendication 1, 2, ou 3, où la surface massique est comprise dans l'intervalle de 45 à 150 m$^2$/g.

## FIG. 1

| speci-men | specific surface area of alloy powder (m²/g) | mean diameter of long axis (μm) | axial ratio | residual magnetic flux density Br(G) | coercive force Hc(Oe) | square-ness ratio | C/N (dB) | conditions for measuring C/N ratio | |
|---|---|---|---|---|---|---|---|---|---|
| | | | | | | | | center recording frequency (MHz) | track width (μm) |
| A | 45 | 0.17 | 11~13 | 2780 | 1195 | 0.79 | 50.3 | 4.3 | 10 |
| ″ | ″ | ″ | ″ | ″ | ″ | ″ | 50.1 | 5.0 | 10 |
| ″ | ″ | ″ | ″ | ″ | ″ | ″ | 54.7 | 4.3 | 30 |
| ″ | ″ | ″ | ″ | ″ | ″ | ″ | 54.3 | 5.0 | 30 |
| B | 48 | 0.16 | 11~13 | 2770 | 1200 | 0.79 | 50.9 | 4.3 | 10 |
| ″ | ″ | ″ | ″ | ″ | ″ | ″ | 55.5 | 4.3 | 30 |
| C | 51 | 0.14 | 11~13 | 2750 | 1210 | 0.78 | 51.5 | 4.3 | 10 |
| D | 60 | 0.13 | 11~13 | 2745 | 1200 | 0.78 | 54.5 | 4.3 | 10 |
| E | 66 | 0.12 | 11~13 | 2730 | 1220 | 0.77 | 55.5 | 4.3 | 10 |

0 074 410

## FIG. 2

| speci-men | specific surface area of alloy powder (m²/g) | mean diameter of long axis (μm) | axial ratio | residual magnetic flux density Br(G) | coercive force Hc(Oe) | squareness ratio | C/N (dB) | conditions for measuring C/N ratio | |
|---|---|---|---|---|---|---|---|---|---|
| | | | | | | | | center recording frequency (MHz) | track width (μm) |
| F | 25 | 0.70 | 11~13 | 2930 | 1190 | 0.81 | 45.0 | 4.3 | 10 |
| ″ | ″ | ″ | ″ | ″ | ″ | ″ | 44.0 | 5.0 | 10 |
| ″ | ″ | ″ | ″ | ″ | ″ | ″ | 49.5 | 4.3 | 30 |
| ″ | ″ | ″ | ″ | ″ | ″ | ″ | 49.2 | 5.0 | 30 |
| G | 27 | 0.50 | 11~13 | 2890 | 1200 | 0.81 | 45.4 | 4.3 | 10 |
| H | 28 | 0.45 | 11~13 | 2870 | 1210 | 0.81 | 45.7 | 4.3 | 10 |
| I | 32 | 0.30 | 11~13 | 2830 | 1195 | 0.80 | 46.7 | 4.3 | 10 |
| J | 37 | 0.25 | 11~13 | 2810 | 1200 | 0.80 | 48.0 | 4.3 | 10 |
| K | 43 | 0.19 | 11~13 | 2790 | 1210 | 0.79 | 49.5 | 4.3 | 10 |

0 074 410